# FASCICULE DE BREVET EUROPEEN

(11) **EP 0 914 567 B1**
(45) Date de publication et mention de la délivrance du brevet: **17.03.2010**
(21) Numéro de dépôt: 98917260.6
(22) Date de dépôt: 27.03.1998
(51) Int. Cl.: F16D 13/64, F16D 69/04

(54) **DISQUE A GARNITURES DE FRICTION POUR EMBRAYAGE MECANIQUE**
SCHEIBE MIT REIBBELÄGEN FÜR MECHANISCHE KUPPLUNG
DISC WITH FRICTION LINING FOR MECHANICAL CLUTCH

(30) Priorité: 27.03.1997 FR 9703764
(43) Date de publication de la demande: 12.05.1999
(73) Titulaire: Valeo Matériaux de Friction, 87020 Limoges cedex 9 (FR)
(72) Inventeur: FEDERZONI, Luc, F-87620 Vicq sur Breuilh (FR); BACHER, Michel, F-95580 Andilly (FR)
(74) Mandataire: Ramey, Daniel
(86) Numéro de dépôt international: PCT/FR1998/000632
(87) Numéro de publication internationale: WO 1998/044272

(56) Documents cités:
- EP-A- 0 446 098
- EP-A- 0 579 554
- EP-A- 0 579 554
- WO-A-92/04552
- FR-A- 2 370 893

## Description

La présente invention concerne un disque à garnitures de friction pour embrayage mécanique, ce disque comportant dans sa région périphérique, entourant sa partie centrale, des zones de fixation globalement parallèles au plan de ladite partie centrale, d'une part pour une première garniture annulaire ou divisée en plots, destinée à entrer en contact de frottement avec le plateau de pression de l'embrayage, d'autre part pour une seconde garniture également annulaire ou divisée en plots, destinée à entrer en contact de frottement avec le plateau de réaction de cet embrayage.

Ladite région périphérique du disque peut être annulaire et continue, mais elle est couramment fractionnée en pales radiales portant les zones de fixation précitées, ces pales étant reliées à la partie centrale du disque par un pied et servant alternativement à la fixation de la première garniture et à la fixation de la seconde garniture. Les pales peuvent être d'un seul tenant avec la partie centrale du disque, ou lui être reliées par des rivets. Les pales destinées à assurer la fixation d'une garniture peuvent avoir une forme différente de celle des pales destinées à assurer la fixation de l'autre garniture, et ces formes peuvent en elles-mêmes être très variées, en fonction de l'effet recherché ou des impératifs de la fabrication.

Ces pales peuvent aussi avoir toutes la même forme, par exemple une forme en drapeau, et être placés dans un sens et dans l'autre pour présenter elles-mêmes des zones de fixation servant alternativement à la fixation de l'une des garnitures et de l'autre garniture.

Des exemples de pales de ces différents types sont fournis dans la demande de brevet européen n°0 579 554 (US-A-5 452 783) et dans la demande de brevet français n° 2 370 893. Pour augmenter la rigidité de la fixation des garnitures et pour obtenir une usure plus régulière de ces garnitures, sans incrustations, il est fréquent, et c'est le cas dans les deux documents précités, de prévoir sur chaque pale, par exemple de part et d'autre de sa zone de fixation sur la garniture concernée, des zones de portée supplémentaires décalées vers l'autre garniture et pouvant servir d'appui à celle-ci.

Ceci étant, la fonction d'un tel disque de friction pour embrayage mécanique, dont l'application trouve bien entendu sa plus grande extension dans le domaine de l'automobile, est suffisamment connue du technicien de ce domaine pour n'avoir pas besoin d'être décrite. Pour plus de précisions, on se rapportera aux documents précités. Pour mémoire, on rappellera que lorsque l'embrayage est engagé, le couple moteur est transmis à un arbre mené via le disque de friction, dont les garnitures de friction sont serrées alors entre les plateaux de pression et de réaction de l'embrayage.

La présente invention concerne plus particulièrement la fixation des garnitures sur les pales de ces disques.

Le problème est de deux ordres :
1°) la présence, sur les pales, de zones de portée supplémentaires, évoquée plus haut, provoque une tendance au fléchissement des pales dans leur partie centrale lorsqu'elles sont mises sous charge entre les plateaux de pression et de réaction ou pour l'encollage. Par suite, la portée offerte par ces pales à la garniture tend à se concentrer sur les plis, que l'assemblage entre pales et garnitures soit assuré par collage ou par rivets, d'où risque d'empreintes sur les garnitures ;
2°) lorsque l'on procède à une fixation par collage, le problème se pose de la délimitation de la surface de pale encollée. L'encollage est réalisé par le dépôt de gouttes de colle, concentrées au milieu de la pale. L'assemblage est alors réalisé par mise en pression de la pale sous 20 bars ; il en résulte que la colle s'étale sur une surface irrégulière, aux contours indéfinis, et sur laquelle on ne peut agir, dans une certaine mesure, qu'en réglant soigneusement les paramètres (quantité de colle et pression)

Dans ces conditions il arrive fréquemment que la colle déborde sur la pale, par rapport à la surface de celle-ci qui doit être en contact avec la garniture. Lorsque la zone de fixation ou pale, et c'est le cas notamment des pales tripodes, comporte des pliages pour la réalisation des zones de portée supplémentaire, il peut même arriver que la colle déborde sur les plis, ce qui nuit à leur fonction en les raidissant, avec même un risque de blocage par les bavures.

Le document WO 92/04552 décrit un disque de friction dans lequel les garnitures de friction sont collées chacune sur une face du disque par un seul cordon de colle continu et ondulé, ce qui ne permet pas d'éviter les inconvénients précités.

Le but de la présente invention est d'éliminer ces inconvénients, au moyen d'un disque à garnitures de friction tel que défini en revendication 1.

Ainsi la colle sera essentiellement localisée dans les zones où la pression sera la plus forte lors du pressage desdites zones de fixation sur les garnitures, en évitant la partie centrale de ces zones de fixation, où la pression est moins forte et où la colle pourrait même subir des forces d'arrachement.

Dans le cas où les zones de fixation ont une forme quadrangulaire, par exemple en trapèze, le disque pourra encore se caractériser par la présence d'au moins deux cordons de colle s'étendant à proximité de deux bords opposés de chacune desdites zones de fixation, et même par la présence de deux paires de cordons de colle s'étendant respectivement à proximité des deux paires de bords opposés deux à deux de chacune desdites zones de fixation.

On pourrait également prévoir un cordon de colle périphérique s'étendant à proximité des bords de chacune desdites zones de fixation, à l'intérieur de celles-ci.

Dans le cas où, comme indiqué plus haut, ladite région périphérique est divisée en pales comportant des zones de pliage séparant une partie centrale de zones de portée supplémentaires, on pourra encore prévoir que lesdites zones de fixation s'étendent respectivement dans lesdites parties centrales des pales.

Un mode d'exécution de l'invention va maintenant être décrit à titre d'exemple nullement limitatif avec référence aux figures du dessin ci-annexé dans lequel :
- la figure 1 est une vue de face partielle de la région périphérique d'un disque à garnitures de friction conforme à l'invention, du type à pales découpées du genre dit "tripode" ; et
- la figure 2 est une vue en coupe radiale selon la ligne II-II de la figure 1.

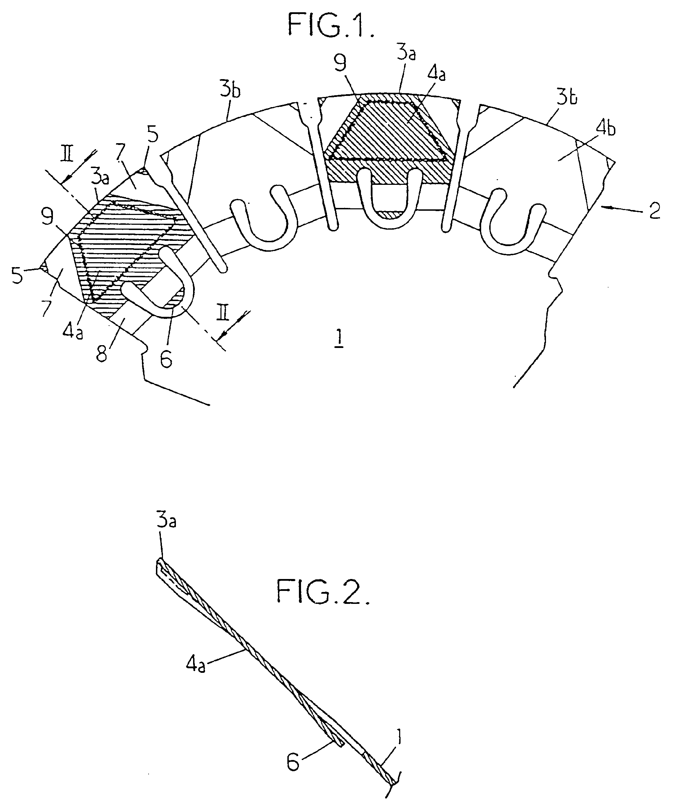

Sur la figure 1, qui représente un secteur de disque d'embrayage, la partie centrale du disque a été référencée en 1 et sa partie périphérique en 2, cette partie périphérique est divisée en un certain nombre de pales 3a et 3b alternées, les pales 3a étant destinées à être assujetties à l'une des garnitures de friction opposées du disque d'embrayage, et les pales 3b étant destinées à être assujetties à l'autre garniture de friction. Sur chaque pale on a représenté chaque zone de fixation 4a, 4b de la pale à la garniture correspondante, zone qui a globalement une forme en trapèze, les pales ayant également une forme trapézoïdale. Les zones de fixation 4a, qui sont tournées vers l'observateur, ont été grisées. Pour mémoire et quoique cela ne concerne pas directement l'invention, on notera que les pales comportent dans leurs deux angles extérieurs, de même qu'à l'extrémité d'une languette interne centrale découpée, des zones d'appui supplémentaires pour la garniture concernée ; sur l'une des pales 3a, ces zones d'appui ont été référencées respectivement en 5 et 6. Elles sont séparées de la zone de fixation centrale 4a par des zones de pliage respectivement 7 et 8, ceci de façon connue.

Les zones de pliage 8 s'étendent perpendiculairement à l'axe de symétrie radiale des pales 3a, 3b et sont dites tangentielles. Elles appartiennent au pieds des pales 3a, 3b et se raccrochent à la partie centrale 1, destinée à être accouplée de manière rigide ou élastique à un moyeu destiné à être calé en rotation à un arbre mené.

Les zones 8 appartiennent au bord radial inférieur des pales.

Les zones de pliages 7 s'étendent obliquement par rapport à l'axe de symétrie radial des pales et débouchent dans le bord radial supérieur de la pale 3a, 3b et dans l'un des bords latéraux de la pale 3a, 3b.

Ceci étant, on prévoit, conformément à l'invention, pour l'assujettissement de chaque zone de fixation 4a, 4b à la garniture correspondante, de déposer sur chacune de ces zones un cordon de colle 9. Dans l'exemple de la figure 1 ce cordon est périphérique, à savoir qu'il suit un parcours fermé, à l'intérieur et à proximité des bords de la zone de fixation concernée (zone 4a sur le dessin). De la sorte, lors de la mise en pression la colle n'atteindra pas les zones de pliage 7, 8 et l'on réalise une économie substantielle de colle en n'en mettant pas dans la partie centrale des zones de fixation : la colle se trouve ainsi localisée dans la partie de la pale où elle peut être la plus efficace car susceptible d'être soumise aux plus fortes pressions et les moins déformées lors du pressage des garnitures sur le disque. Par suite des efforts sur les pales et de leur déformation centrale, la pression dans la partie centrale est en effet notablement réduite, alors qu'elle est augmentée à proximité des bords des zones de fixation.

Pour ces raisons et dès lors que l'on se limite à un dépôt de colle à l'intérieur et le long des bords des zones de fixation, on comprend que le cordon 9 peut présenter des interruptions dans les angles, et se présenter alors sous la forme de deux paires de cordons opposés deux à deux ou, à la rigueur, de deux cordons opposés le long des zones de pliage.

Dans le mode de réalisation représenté les pales 3a, 3b présentent à leur périphérie interne, au niveau du pli 8 d'orientation tangentielle perpendiculaire à l'axe de symétrie radial, une zone de fixation 4a, 4b, et à leur périphérie externe trois zones de fixation 4a, 5, 6 du fait de la présence des zones de pliage obliques 7 par rapport à l'axe de symétrie radial d'une pale. Il n'en est pas forcément ainsi ; par exemple, la pale peut être dépourvue de pli tangentiel et comporter une zone de fixation dans le plan de la partie centrale, comme à la figure 6 du document FR-A-2 730 893. Le collage est alors effectué sur cette zone de fixation et sur l'autre zone de fixation s'étendant de la périphérie externe à la périphérie interne de la pale. En variante, chaque pale peut comporter trois cordons, à savoir un cordon par pli 7, 8 s'étendant parallèlement par rapport à ceux-ci.

Selon une autre variante, le cordon associé au pli 8 peut s'étendre localement centralement au niveau de la zone délimitée par la fente en forme de U (non référencée) affectant également le pli 8.

Les zones de fixation 4a, 4b peuvent être dotées de trous en sorte que l'on peut utiliser des pales servant à la fixation par rivetage des garnitures de friction. Les trous sont habituellement à distance des bords des zones de fixation. Grâce aux cordons de colle, selon l'invention, les trous ne sont pas gênants en sorte que l'on peut standardiser le disque d'embrayage.

## Revendications

1. Disque de friction pour embrayage mécanique, comprenant une partie centrale et une région périphérique divisées en pales (3a, 3b) sur lesquelles deux garnitures de friction annulaires ou divisées en plots sont fixées en alternance, chaque pale comprenant sur une face une zone (4a; 4b) de fixation d'une des garnitures et, sur sa face opposée, des zones de portée supplémentaires (5, 6) venant en appui sur l'autre garniture, et les pales étant formées en alternance de sorte que chaque garniture de friction est fixée sur une pale sur deux et est en appui sur les zones de portée supplémentaires des autres pales, les zones de fixation étant globalement parallèles au plan de la partie centrale du disque, **caractérisé en ce que** chaque garniture est collée sur les zones de fixation (4a;4b) d'une pale sur deux au moyen d'un ou plusieurs cordons de colle (9) déposés à l'intérieur de chaque zone de fixation et le long des bords de cette zone, les cordons de colle d'une zone de fixation étant indépendants des cordons de colle des autres zones de fixation.

2. Disque selon la revendication 1, dans lequel lesdites zones de fixation (4a;4b) ont une forme quadrangulaire, **caractérisé par** la présence d'au moins deux cordons de colle s'étendant à proximité de deux bords opposé de chacune desdites zones de fixation (4a, 4b).

3. Disque selon la revendication 2, **caractérisé par** la présence de deux paires de cordons de colle s'étendant respectivement à proximité des deux paires de bords opposés deux à deux de chacune desdites zones de fixation (4a, 4b).

4. Disque selon la revendication 1, dans lequel lesdites zones de fixation (4a, 4b) ont une forme quadrangulaire, **caractérisé par** la présence d'au moins un cordon de colle périphérique (9) s'étendant à proximité des bords de chacune desdites zones de fixation (4a, 4b), à l'intérieur de celles-ci.

5. Disque selon l'une quelconque des revendications précédentes, dans lequel les pales comportent des zones de pliage entre une partie centrale et les zones de portée supplémentaires (5, 6), **caractérisé en ce que** les zones de fixation (4a, 4b) s'étendent respectivement dans lesdites parties centrales des pales.

## Claims

1. Friction disc for a mechanical clutch, comprising a central part and a peripheral region divided into blades (3a, 3b) on which two friction linings which are annular or divided into blocks are secured in an alternating manner, each blade comprising on one surface an area (4a; 4b) for securing of one of the linings, and, on its opposite surface, additional bearing areas (5, 6) which are supported on the other lining, and the blades being formed in an alternating manner such that each friction lining is secured to one blade out of two, and is supported on the additional bearing areas of the other blades, the securing areas being globally parallel to the plane of the central part of the disc, **characterised in that** each lining is glued onto the securing areas (4a; 4b) of one blade out of two by means of one or a plurality of beads of glue (9) which are deposited in the interior of each securing area and along the edges of this area, the beads of glue of one securing area being independent from the beads of glue of the other securing areas.

2. Disc according to claim 1, wherein the said securing areas (4a; 4b) have a quadrilateral form, **characterised by** the presence of at least two beads of glue which extend in the vicinity of two opposite edges of each of the said securing areas (4a; 4b).

3. Disc according to claim 2, **characterised by** the presence of two pairs of beads of glue which extend respectively in the vicinity of the two pairs of opposite edges in pairs of each of the said securing areas (4a; 4b).

4. Disc according to claim 1, wherein the said securing areas (4a; 4b) have a quadrilateral form, **characterised by** the presence of at least one peripheral bead of glue (9) which extends in the vicinity of the edges of each of the said securing areas (4a; 4b), into the interior of the latter.

5. Disc according to any one of the preceding claims, wherein the blades comprise areas of folding between a central part and the additional bearing areas (5, 6), **characterised in that** the securing areas (4a; 4b) extend respectively into the said central parts of the blades.

## Patentansprüche

1. Reibscheibe für eine mechanische Kupplung, umfassend einen Mittelteil und einen Umfangsbereich, der in Segmente (3a, 3b) unterteilt ist, auf denen zwei ringförmige oder in Plättchen unterteilte Reibbeläge wechselweise befestigt sind, wobei jedes Segment auf einer Seite eine Befestigungszone (4a; 4b) für einen der Beläge und auf seiner entgegengesetzten Seite zusätzliche Auflagezonen (5, 6) aufweist, die in Auflage auf den anderen Belag kommen, und wobei die Segmente wechselweise derart geformt sind, dass jeder Reibbelag auf einem von zwei Segmenten befestigt und in Auflage auf den zusätzlichen Auflagezonen der anderen Segmente ist, wobei die Befestigungszonen insgesamt parallel zur Ebene des Mittelteils der Scheibe sind, **dadurch gekennzeichnet, dass** jeder Belag mit Hilfe eines oder mehrerer Leimstreifen (9), die im Innern von jeder Befestigungszone und entlang der Kanten dieser Zone aufgebracht sind, auf die Befestigungszonen (4a; 4b) eines von zwei Segmenten geklebt ist, wobei die Leimstreifen einer Befestigungszone unabhängig von den Leimstreifen der anderen Befestigungszonen sind.

2. Scheibe nach Anspruch 1, bei der die besagten Befestigungszonen (4a, 4b) eine viereckige Form haben, **gekennzeichnet durch** das Vorhandensein von mindestens zwei Leimstreifen, die sich in der Nähe von zwei gegenüberliegenden Kanten jeder der besagten Befestigungszonen (4a, 4b) erstrecken.

3. Scheibe nach Anspruch 2, **gekennzeichnet durch** das Vorhandensein von zwei Paaren von Leimstreifen, die sich in der Nähe der zwei Paare von sich paarweise gegenüberliegenden Kanten jeder der besagten Befestigungszonen (4a, 4b) erstrecken.

4. Scheibe nach Anspruch 1, bei der die besagten Befestigungszonen (4a, 4b) eine viereckige Form haben, **gekennzeichnet durch** das Vorhandensein mindestens eines Umfangsleimstreifens (9), der sich in der Nähe der Kanten jeder der besagten Befestigungszonen (4a, 4b), in deren Innern, erstreckt.

5. Scheibe nach einem der vorangehenden Ansprüche, bei der die Segmente Biegezonen zwischen einem Mittelteil und den zusätzlichen Auflagezonen (5, 6) umfassen, **dadurch gekennzeichnet, dass** sich die Befestigungszonen (4a, 4b) jeweils in den besagten Mittelteilen der Segmente erstrecken.
